# EUROPÄISCHE PATENTSCHRIFT

(11) **EP 4 103 907 B1**
(45) Veröffentlichungstag und Bekanntmachung des Hinweises auf die Patenterteilung: **04.03.2026**
(21) Anmeldenummer: 21701657.5
(22) Anmeldetag: 18.01.2021
(51) Int. Cl.: G01C 1/00, G01C 21/00, G01C 21/20

(54) **VERFAHREN ZUR POSITIONSBESTIMMUNG EINES WASSERFAHRZEUGS MITTELS OPTISCHER PEILUNG**
METHOD FOR DETERMINING THE POSITION OF A WATERCRAFT BY MEANS OF OPTICAL BEARING
PROCÉDÉ DE DÉTERMINATION DE LA POSITION D'UNE EMBARCATION PAR RELÈVEMENT OPTIQUE

(30) Priorität: 11.02.2020 DE 102020103466
(43) Veröffentlichungstag der Anmeldung: 21.12.2022
(73) Patentinhaber: Anschütz GmbH, 24106 Kiel (DE)
(72) Erfinder: WERNER, Markus, 24106 Kiel (DE); WESSEL, Michael, 24106 Kiel (DE); STRÜMPEL, Sebastian, 24106 Kiel (DE); MUES, Andreas, 24106 Kiel (DE)
(74) Vertreter: Lobemeier, Martin Landolf
(86) Internationale Anmeldenummer: PCT/DE2021/100053
(87) Internationale Veröffentlichungsnummer: WO 2021/160209

(56) Entgegenhaltungen:
- WO-A1-2018/216535
- CN-A- 102 818 566
- CN-U- 202 013 195
- GB-A- 2 574 375
- SE-B- 380 344
- US-A1- 2017 082 441

## Beschreibung

Die Erfindung betrifft ein Verfahren zur Positionsbestimmung eines Wasserfahrzeugs mittels optischer Peilung. Insbesondere betrifft die Erfindung ein Verfahren zur Positionsbestimmung bei der terrestrischen Navigation.

Wenngleich die Standortbestimmung von Wasserfahrzeugen im zivilen und militärischen Schiffsverkehr heutzutage mithilfe von Navigationssatellitensystem in einfacher Weise schnell, zuverlässig und vor allem automatisiert vorgenommen werden kann, sind vielfach Situationen bekannt, in denen die Standortbestimmung manuell durchgeführt werden muss - sei es, weil das entsprechende Navigationssatellitensystem wegen Ausfall oder Störung nicht verfügbar ist oder weil eine manuelle Standortbestimmung zum Abgleich mit den Daten des Navigationssatellitensystems vorgeschrieben ist.

Für die manuelle Standortbestimmung wird im Rahmen der terrestrischen Navigation unter Zuhilfenahme eines Peilplans, in dem die Zeiten und die Häufigkeit der Peilung festgelegt sind, eine optische Peilung von Marken bekannter Position vorgenommen. Hierzu befinden sich üblicherweise - zumindest auf großen Wasserfahrzeugen, beispielsweise Container- und Kreuzfahrtschiffen - auf der Kommandobrücke des Wasserfahrzeugs außerhalb des Ruderhauses auf den Nocken angeordnete Peileinrichtungen, mit denen eine (vorbestimmte) Marke bekannter Position angepeilt und der entsprechende Richtungswinkel abgelesen werden kann.

Für die terrestrische Navigation ist dabei die Peilung von zwei Marken notwendig, wobei die Positionsbestimmung durch Kreuzpeilung, Querab-Peilung oder Versegelungspeilung erfolgt.

Problematisch bei diesem Vorgehen ist der hohe apparative und personelle Aufwand und die Fehlerträchtigkeit bei der Übertragung der bei der Peilung aufgenommenen Daten. Zum einen müssen die optischen Peilgeräte an einem Ort, beispielsweise auf den Nocken der Kommandobrücke, installiert sein, der einerseits vom Ruderhaus leicht zugänglich ist, gleichzeitig aber einen möglichst freien Rundumblick ermöglicht. Die an diesem Ort manuell ermittelte Richtungswinkel muss darauf dem im Ruderhaus befindlichen Navigator mitgeteilt werden, damit dieser die Standlinien in die Seekarte eintragen kann. Insbesondere bei schwerer See sind also die Peilung als solche aufgrund der Roll- und Stampfbewegungen des Wasserfahrzeugs wie auch die Übermittlung des Richtungswinkels, die häufig durch Rufen erfolgt, sehr fehleranfällig. Darüber hinaus kann auch das Verlassen des Ruderhauses für das schiffsführende Personal sehr gefährlich sein, sodass eine Peilung vom Innern des Ruderhauses erfolgen muss, wobei in diesem Fall eine nur eingeschränkte Sicht nach Außen ermöglicht und eine Peilung daher stark erschwert ist.

Dokument US 2017/082441 A1offenbart eine Positionsbestimmungseinheit für ein Objekt an Land oder auf See und ein Verfahren zur Positionsbestimmung. Die Positionsbestimmungseinheit hat Zugriff auf eine dreidimensionale Karte, die dreidimensionale georeferenzierte Positionsdaten umfasst. Die Positionsbestimmungseinheit umfasst ferner ein Messinstrument, das so angeordnet ist, dass es Peilund/oder Entfernungsinformationen in Bezug auf das Land- oder Seeobjekt erhält.

Aufgabe der Erfindung ist es daher, insbesondere für die terrestrische Navigation ein Verfahren zur Positionsbestimmung eines Wasserfahrzeugs durch optische Peilung von wenigstens zwei Marken bekannter Position zu schaffen, das mit geringem Aufwand zuverlässig, schnell und robust ausgeführt werden kann.

Diese Aufgabe wird erfindungsgemäß durch das Verfahren mit den Merkmalen von Anspruch 1 und die Vorrichtung mit den Merkmalen von Anspruch 9 gelöst. Die Unteransprüche geben jeweils vorteilhafte Ausgestaltungen der Erfindung wieder.

Der Grundgedanke der Erfindung besteht darin, die optische Peilung und Ermittlung der Standlinien in einem Schritt im Ruderhaus zusammenzufassen. Hierfür ist bevorzugt eine außerhalb des Ruderhauses angeordnete Kamera vorgesehen, die insbesondere bei einer hohen Winkelauflösung eine hohe Winkelgenauigkeit, also eine winkeltreue Auflösung aufweist. Die Kamera weist also möglichst keine zu einer Winkelverzerrung beitragende Verzeichnung auf und ist dabei so angeordnet, dass sich die Schiffsaufbauten nicht störend auf das aufgenommene Bild auswirken, also möglichst nicht im Öffnungswinkel der Kamera angeordnet sind. Die Ausrichtung der optischen Achse der Kamera im Verhältnis zu einem vorbestimmten Koordinatensystem, beispielsweise zu einer Kompassrose oder wenigstens zur Längsachse des Wasserfahrzeugs wird als bekannt vorausgesetzt, damit eine Einordnung in ein globales Koordinationssystem möglich ist. Die anzupeilenden Marken werden dabei im von der Kamera aufgenommenen Bild, das auf einem auf der Brücke, insbesondere auf einem im Ruderhaus angeordneten Monitor wiedergegeben wird, markiert, sodass der Richtungswinkel der Marken - die Winkeltreue der Kamera vorausgesetzt - unmittelbar abgelesen, die Standlinien ermittelt und die Position des Wasserfahrzeugs automatisch berechnet werden können.

Erfindungsgemäß entfällt das mitunter bei schwerer See schwierig durchzuführende Peilen und das damit verbundene Ablesen des Richtungswinkels sowie die störanfällige Übermittlung des Richtungswinkels zum Steuermann. Vielmehr kann der Navigator das Markieren wenigstens einer Marke in einem zuvor aufgenommenen Bild selbst erledigen, wobei das Ermitteln des Richtungswinkels und die Bestimmung der Position automatisiert erfolgen kann. Werden zwei Marken in einem Bild markiert, wird die Genauigkeit dadurch erhöht, dass die Richtungswinkel der Marken im selben Zeitpunkt ermittelt werden, also eine Versegelung nicht erfolgt. Nichtsdestoweniger ist es mit dem Verfahren auch möglich, eine Versegelungspeilung durchzuführen.

Erfindungsgemäß wird also ein Verfahren zur Positionsbestimmung eines Wasserfahrzeugs durch optische Peilung von wenigstens zwei Marken bekannter Position bereitgestellt, mit den Schritten:
- Aufnehmen wenigstens eines wenigstens eine erste Marke bekannter Position aufweisenden ersten Bilds mittels einer an Bord des Wasserfahrzeugs angeordneten Kamera, deren optische Achse relativ zu einem vorbestimmten Koordinatensystem in einem bekannten Kamerawinkel ausgerichtet ist und eine wenigstens in der Horizontalen winkeltreue Auflösung aufweist,
- Ermitteln der die erste Marke mit der Kamera verbindenden ersten Standlinie durch Markieren der ersten Marke in dem von der Kamera aufgenommenen ersten Bild,
- Ermitteln einer eine zweite Marke mit der Kamera verbindenden zweiten Standlinie durch Markieren einer zweiten Marke dem von der Kamera aufgenommenen ersten Bild, und
- Bestimmen der Position des Wasserfahrzeugs mittels der ersten Standlinie und der zweiten Standlinie.

Die erste Marke und/oder die zweite Marke ist bevorzugt eine Landmarke. Alternativ kann die erste Marke und/oder die zweite Marke auch ein Fixstern oder ein Sternbild sein. Schließlich ist es möglich, ein Radarziel als erste Marke und/oder die zweite Marke zu verwenden.

Die erste Marke und die zweite Marke können gemäß einem nicht der Erfindung entsprechenden Verfahren auch identisch sein, wenn die Versegelungspeilung verwendet wird. Hierfür ist es unter Kenntnis von Fahrt und Kurs über Grund zwingend notwendig zwei Bilder in einem zeitlich voneinander getrennten Abstand aufzunehmen und in diesen Bildern dieselbe Marke zu markieren und dadurch den jeweiligen Richtungswinkel zu ermitteln. Bei dem Bild bzw. den Bildern kann es sich auch um Videobilder handeln.

Die erste Marke und die zweite Marke können schließlich auch gemäß einem nicht der Erfindung entsprechenden Verfahren im Rahmen einer Querab-Peilung im rechten Winkel zueinander angeordnet sind.

Nach einer weiteren bevorzugten Ausgestaltung ist das von der Kamera aufgenommene erste Bild und das von der Kamera aufgenommene zweite Bild mittels eines mechanischen, einer optomechanischen, einer elektronischen und/oder einer informationstechnischen Bildstabilisierung stabilisiert. Insbesondere erfolgt die Bildstabilisierung derart, dass das von der Kamera aufgenommene Bild stets den Horizont erfasst und dadurch die für das Peilen notwendigen Landmarken erfasst sind. Die beim manuellen Peilen auftretenden Probleme während des Stampfens des Wasserfahrzeugs in schwerer See entfallen somit.

Besonders bevorzugt ist eine Ausgestaltung des Verfahrens, wonach die erste Marke und/oder die zweite Marke durch Abgleichen mit in einer Datenbank, insbesondere in einer Bilddatenbank hinterlegten Marken automatisch markiert wird. Durch ein geeignetes Bildverarbeitungs- und Objekterkennungsverfahren können die von der Kamera aufgenommenen Bilder auf von der Kamera erfasste Objekte, die als Marken dienen, untersucht werden, sodass die Ortsbestimmung des Wasserfahrzeugs vollautomatisch erfolgen kann.

Zur Kalibrierung des Systems ist die optische Achse der Kamera (zunächst) in einem zur Längsachse des Wasserfahrzeugs bekannten Kamerawinkel ausgerichtet ist. Dieser Kamerawinkel kann auch auf ein als Bezugssystem verwendetes vorbestimmtes Koordinatensystem bezogen werden, dass das Koordinatensystem des Wasserfahrzeugs ersetzt.

Das Bestimmen der Position des Wasserfahrzeugs mittels der ersten Standlinie und der zweiten Standlinie kann unter Verrechnung eines vorbestimmten Bezugspunkts, beispielsweise der Schiffsmittelpunkts, erfolgen. Hierfür muss lediglich eine rechnerische Korrektur der Kameraposition im Verhältnis zum Bezugspunkt erfolgen, die vollautomatisch durchgeführt werden kann.

Weiter ist bevorzugt vorgesehen, dass die mittels Peilung bestimmte Position des Wasserfahrzeugs mit Positionsdaten eines weiteren, sich von der Peilung unterscheidenden Verfahrens zur Positionsbestimmung abgeglichen und bei Überschreitung einer vorbestimmten Toleranz ein Warnsignal ausgegeben wird.

Entsprechend ist zur Durchführung des Verfahrens eine Vorrichtung vorgesehen, die die für die Durchführung des Verfahrens notwendigen Mittel zur Verfügung stellt. Insbesondere ist hierfür eine Vorrichtung für die Positionsbestimmung eines ein Ruderhaus aufweisenden Wasserfahrzeugs durch optische Peilung von wenigstens zwei Marken bekannter Position vorgesehen, mit
- wenigstens einer Kamera, deren optische Achse relativ zu einem vorbestimmten Koordinatensystem in einem bekannten Kamerawinkel ausgerichtet ist und eine wenigstens in der Horizontalen winkeltreue Auflösung aufweist,
- einem im Ruderhaus des Wasserfahrzeugs angeordneten, mit der Kamera verbundenen Monitor zur Wiedergabe des von der Kamera aufgenommenen Bilds,
- im Ruderhaus angeordneten Markierungsmitteln zum Markieren der Marken (M1, M2) in einem von der Kamera aufgenommenen Bild, und
- Mitteln zum Ermitteln von die Kamera mit den Marken (M1, M2) verbindenden Standlinien (S1, S2) und zur Berechnung der Position des Wasserfahrzeugs (CS) mittels der Standlinien (S1, S2).

Bevorzugt ist die Kamera außerhalb des Ruderhauses bzw. der Brücke angeordnet.

Insbesondere ist die Kamera in einem Bereich des Wasserfahrzeugs angeordnet, der ohne Störung der Schiffsaufbauten einen 360°-Rundumblick gewährleistet, beispielsweise auf dem Dach der Kommandobrücke/Brücke bzw. des Ruderhauses.

Die Kamera weist aus den oben genannten Gründen bevorzugt eine mechanische, eine optomechanische, eine elektronische und/oder eine informationstechnische Bildstabilisierung auf.

Die Kamera kann - unter der Voraussetzung, dass eine winkeltreue Abbildung möglich ist - beispielsweise ein Fischaugenobjektiv aufweisen, wobei das durch das Fischaugenobjektiv aufgenommene Bild informationstechnisch entzerrt werden kann. Zusätzlich oder alternativ kann die Kamera bevorzugt als eine Mehrzahl von Kameras ausgebildet sein, wobei die Öffnungswinkel der Kameras höchst bevorzugt überlappend angeordnet sind, wobei Mittel zum Zusammensetzen eines einzigen Bilds aus der Mehrzahl von von den Kameras aufgenommenen Bildern vorgesehen sind.

Das Verfahren gemäß der Erfindung bzw. die erfindungsgemäß ausgestaltete Vorrichtung bedienen sich zu deren Verwirklichung einer computergestützten Einrichtung.

Die Erfindung wird im Folgenden anhand eines in den beigefügten Zeichnungen dargestellten, besonders bevorzugt ausgestalteten Ausführungsbeispiels näher erläutert. Es zeigen:
- Fig. 1: eine schematische Ansicht eines mit terrestrischer Navigation fahrenden Containerschiffs;
- Fig. 2: eine schematische Ansicht eines von einer auf dem Containerschiff angeordnete Kamera aufgenommen Bilds; und
- Fig. 3: eine schematische Ansicht des mit terrestrischer Navigation fahrenden Containerschiffs aus Fig. 1 mit eingezeichneten Standlinien.

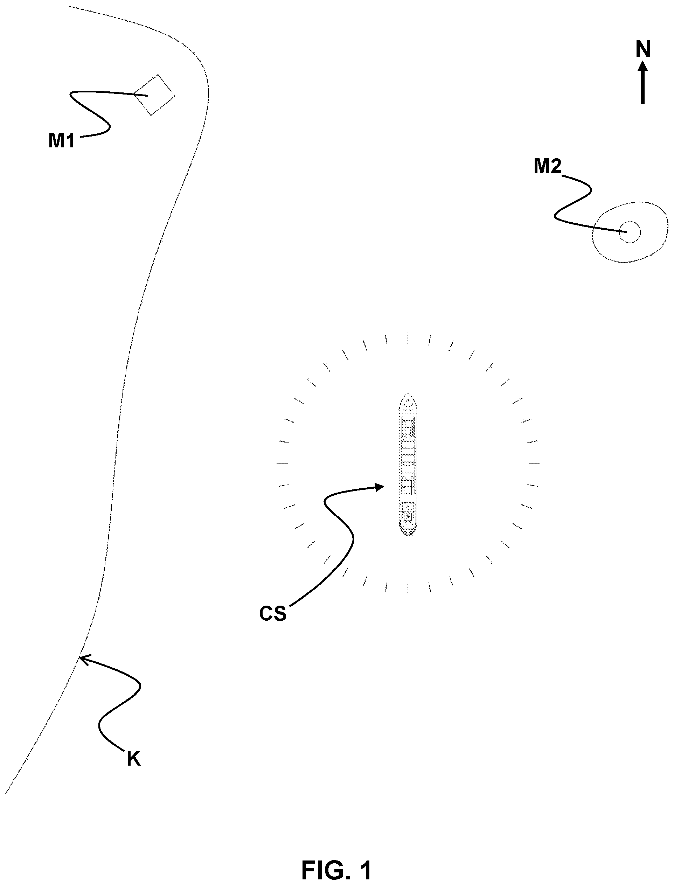

Fig. 1 zeigt eine schematische Ansicht eines mit terrestrischer Navigation fahrenden Containerschiffs. Das Containerschiff CS befindet sich auf einem nördlichen Kurs entlang der Küstenlinie K in Sichtweite der ersten Landmarke M1 und der zweiten Landmarke M2.

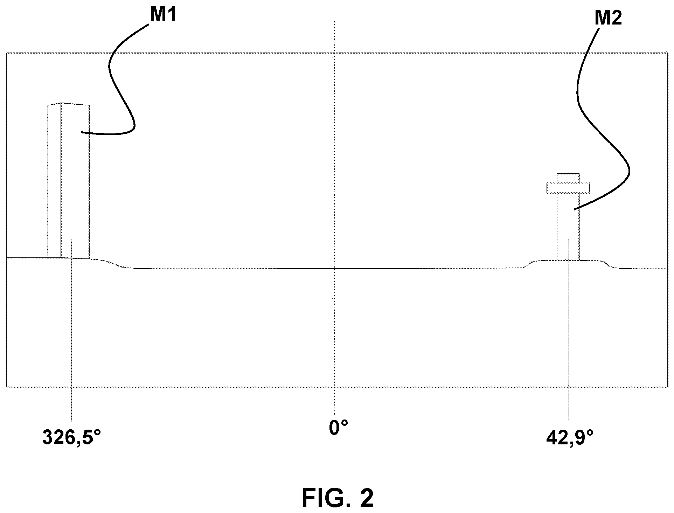

Mittels einer an Bord des Wasserfahrzeugs CS angeordneten, eine winkeltreue Auflösung aufweisenden Kamera, deren optische Achse relativ zu einem vorbestimmten Koordinatensystem in einem bekannten Kamerawinkel, hier: 0°, ausgerichtet ist, wird das in Fig. 2 schematische dargestellte Bild aufgenommen. Das in Fig. 2 dargestellte Bild weist die nach 0° ausgerichtete optische Achse der Kamera aus, wobei die im Öffnungswinkel der Kamera liegende Umgebung abgebildet wird. Insbesondere sind im Bild die Landmarke M1 und die Landmarke M2 zu erkennen.

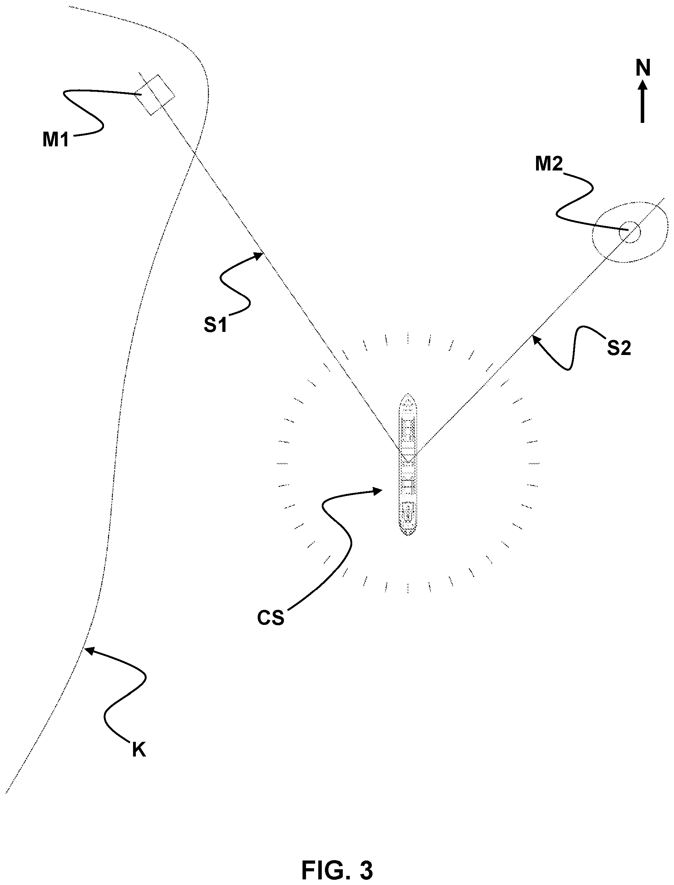

Das Bild wird auf einem im Ruderhaus des Wasserfahrzeugs angeordneten, mit der Kamera verbundenen Monitor wiedergegeben, wobei der Navigator computergestützte Markierungsmitteln zum Markieren der Marken M1, M2 in dem von der Kamera aufgenommenen Bild verwendet. Aufgrund der in diesem Fall manuell am Bildschirm vorgenommenen Markierung werden die die Kamera mit den Landmarken M1, M2 verbindenden - in Fig. 3 dargestellten - Standlinien S1, S2 ermittelt und die Position des Wasserfahrzeugs CS mittels der Standlinien S1, S2 rechnergestützt ermittelt.

Alternativ kann die Erkennung und Markierung der Landmarken M1, M2 softwaregestützt mittels einer eine Mehrzahl von Marken aufweisenden Datenbank erfolgen, sodass kein Eingriff des Steuermanns notwendig ist. Dabei werden die Richtungswinkel, gegebenenfalls auf einen vorbestimmten Bezugspunkt im Bild angezeigt, sodass zusätzlich auch eine manuelle Eintragung der Richtungswinkel in eine Seekarte möglich ist.

## Patentansprüche

1. Verfahren zur Positionsbestimmung eines Wasserfahrzeugs (CS) durch optische Peilung von wenigstens zwei Marken (M1, M2) bekannter Position,
mit den Schritten:
Aufnehmen wenigstens eines wenigstens eine erste Marke (M1) bekannter Position aufweisenden ersten Bilds mittels einer an Bord des Wasserfahrzeugs (CS) angeordneten Kamera, deren optische Achse relativ zu einem vorbestimmten Koordinatensystem in einem bekannten Kamerawinkel ausgerichtet ist und eine wenigstens in der Horizontalen winkeltreue Auflösung aufweist,
Ermitteln der die erste Marke (M1) mit der Kamera verbindenden ersten Standlinie (S1) durch das Markieren der ersten Marke (M1) in dem von der Kamera aufgenommenen ersten Bild,
Ermitteln einer eine zweite Marke (M2) mit der Kamera verbindenden zweiten Standlinie (S2) durch Markieren einer zweiten Marke (M2) in dem von der Kamera aufgenommenen ersten Bild , und
Bestimmen der Position des Wasserfahrzeugs (CS) mittels der ersten Standlinie (S1) und der zweiten Standlinie (S2).

2. Verfahren nach Anspruch 1, **dadurch gekennzeichnet, dass** die erste Marke (M1) und/oder die zweite Marke (M2) eine Landmarke ist.

3. Verfahren nach einem der vorhergehenden Ansprüche, **dadurch gekennzeichnet, dass** die erste Marke (M1) und/oder die zweite Marke (M2) ein Fixstern oder ein Sternbild ist.

4. Verfahren nach einem der vorhergehenden Ansprüche, **dadurch gekennzeichnet, dass** die erste Marke (M1) und/oder die zweite Marke (M2) ein Radarziel ist.

5. Verfahren nach einem der vorhergehenden Ansprüche, **dadurch gekennzeichnet, dass** von der Kamera aufgenommene erste Bild mittels eines mechanischen, einer optomechanischen, einer elektronischen und/oder einer informationstechnischen Bildstabilisierung stabilisiert ist.

6. Verfahren nach einem der vorhergehenden Ansprüche, **dadurch gekennzeichnet, dass** die erste Marke (M1) und/oder die zweite Marke (M2) durch Abgleichen mit in einer Datenbank hinterlegten Marken automatisch markiert wird.

7. Verfahren nach einem der vorhergehenden Ansprüche, **dadurch gekennzeichnet, dass** die optische Achse der Kamera in einem zur Längsachse des Wasserfahrzeugs (CS) bekannten Kamerawinkel ausgerichtet ist.

8. Verfahren nach einem der vorhergehenden Ansprüche, **dadurch gekennzeichnet, dass** die mittels Peilung bestimmte Position des Wasserfahrzeugs (CS) mit Positionsdaten eines weiteren, sich von der Peilung unterscheidenden Verfahrens zur Positionsbestimmung abgeglichen und bei Überschreitung einer vorbestimmten Toleranz ein Warnsignal ausgegeben wird.

9. Vorrichtung für die Positionsbestimmung eines ein Ruderhaus aufweisenden Wasserfahrzeugs (CS) durch optische Peilung von wenigstens zwei Marken (M1, M2) bekannter Position, mit
- wenigstens einer Kamera, deren optische Achse relativ zu einem vorbestimmten Koordinatensystem in einem bekannten Kamerawinkel ausgerichtet ist und eine wenigstens in der Horizontalen winkeltreue Auflösung aufweist,
- einem im Ruderhaus des Wasserfahrzeugs angeordneten, mit der Kamera
verbundenen Monitor zur Wiedergabe eines von der Kamera aufgenommenen Bilds,
- im Ruderhaus angeordneten Markierungsmitteln zum Markieren der Marken (M1, M2) in dem von der Kamera aufgenommenen Bild, und
- Mitteln zum Ermitteln von die Kamera mit den Marken (M1, M2) verbindenden Standlinien (S1, S2) und zur Berechnung der Position des Wasserfahrzeugs (CS) mittels der Standlinien (S1, S2).

10. Vorrichtung nach Anspruch 9, **dadurch gekennzeichnet, dass** die Kamera außerhalb des Ruderhauses angeordnet ist.

11. Vorrichtung nach einem der Ansprüche 9 und 10, **dadurch gekennzeichnet, dass** die Kamera eine mechanische, eine optomechanische, eine elektronische und/oder eine informationstechnische Bildstabilisierung aufweist.

12. Vorrichtung nach einem der Ansprüche 9 bis 11, **dadurch gekennzeichnet, dass** die Kamera ein Fischaugenobjektiv aufweist.

13. Vorrichtung nach einem der Ansprüche 9 bis 11, **dadurch gekennzeichnet, dass** die Kamera als eine Mehrzahl von Kameras ausgebildet ist.

14. Vorrichtung nach Anspruch 13, **dadurch gekennzeichnet, dass** die Öffnungswinkel der Kameras überlappend angeordnet und Mittel zum Zusammensetzen eines einzigen Bilds aus der Mehrzahl von von den Kameras aufgenommenen Bildern vorgesehen sind.

## Claims

1. Method for determining the position of a watercraft (CS) by optical bearing of at least two marks (M1, M2) of known position,
having the steps:
Capturing at least one first image showing at least one first mark (M1) of known position by means of a camera arranged on board the watercraft (CS), which optical axis is aligned relative to a predetermined coordinate system at a known camera angle and has an angle-accurate resolution at least in the horizontal plane,
Determining the first position line (S1) connecting the first mark (M1) to the camera by marking the first mark (M1) in the first image captured by the camera,
Determining a second position line (S2) connecting a second mark (M2) to the camera by marking a second mark (M2) in the first image captured by the camera, and
Determining the position of the watercraft (CS) using the first position line (S1) and the second position line (S2).

2. Method according to claim 1, **characterized in that** the first mark (M1) and/or the second mark (M2) is a landmark.

3. Method according to one of the preceding claims, **characterized in that** the first mark (M1) and/or the second mark (M2) is a fixed star or a constellation.

4. Method according to one of the preceding claims, **characterized in that** the first mark (M1) and/or the second mark (M2) is a radar target.

5. Method according to one of the preceding claims, **characterized in that** the first image captured by the camera is stabilized by means of mechanical, optomechanical, electronic, and/or information technology image stabilization.

6. Method according to one of the preceding claims, **characterized in that** the first mark (M1) and/or the second mark (M2) is automatically marked by comparison with marks stored in a database.

7. Method according to one of the preceding claims, **characterized in that** the optical axis of the camera is aligned at a camera angle known relative to the longitudinal axis of the watercraft (CS).

8. Method according to one of the preceding claims, **characterized in that** the position of the watercraft (CS) determined by bearing is compared with position data from another method of position determination that differs from the bearing, and a warning signal is emitted if a predetermined tolerance is exceeded.

9. Device for determining the position of a watercraft (CS) having a wheelhouse by means of optical bearing of at least two marks (M1, M2) of known position, comprising
- at least one camera which optical axis is aligned relative to a predetermined coordinate system at a known camera angle and has an angle-accurate resolution at least in the horizontal plane,
- a monitor connected to the camera and located in the wheelhouse of the watercraft for displaying an image captured by the camera,
- marking means arranged in the wheelhouse for marking the marks (M1, M2) in the image captured by the camera, and
- means for determining the position lines (S1, S2) connecting the camera to the marks (M1, M2) and for calculating the position of the watercraft (CS) using the position lines (S1, S2).

10. Device according to claim 9, **characterized in that** the camera is located outside the wheelhouse.

11. Device according to one of claims 9 and 10, **characterized in that** the camera has mechanical, optomechanical, electronic, and/or information technology image stabilization.

12. Device according to one of claims 9 to 11, **characterized in that** the camera has a fisheye lens.

13. Device according to one of claims 9 to 11, **characterized in that** the camera is designed as a plurality of cameras.

14. Device according to claim 13, **characterized in that** the opening angles of the cameras are arranged to overlap, and means are provided for composing a single image from the plurality of images captured by the cameras.

## Revendications

1. Procédé pour la détermination de position d'un navire (CS) par relèvement optique d'au moins deux repères (M1, M2) de position connue,
comportant les étapes consistant à :
capturer au moins une première image présentant au moins un premier repère (M1) de position connue au moyen d'une caméra disposée à bord du navire (CS), dont l'axe optique est orienté par rapport à un système de coordonnées prédéterminé selon un angle de caméra connu et présente une résolution fidèle à l'angle au moins dans le plan horizontal,
définir la première ligne de position (S1) reliant le premier repère (M1) à la caméra en marquant le premier repère (M1) dans la première image capturée par la caméra,
définir une seconde ligne de position (S2) reliant un second repère (M2) à la caméra en marquant un second repère (M2) dans la première image capturée par la caméra, et
déterminer la position du navire (CS) au moyen de la première ligne de position (S1) et de la seconde ligne de position (S2).

2. Procédé selon la revendication 1, **caractérisé en ce que** le premier repère (M1) et/ou le second repère (M2) sont des repères terrestres.

3. Procédé selon l'une des revendications précédentes, **caractérisé en ce que** le premier repère (M1) et/ou le second repère (M2) sont des étoiles fixes ou des constellations.

4. Procédé selon l'une des revendications précédentes, **caractérisé en ce que** le premier repère (M1) et/ou le second repère (M2) sont des cibles radars.

5. Procédé selon l'une des revendications précédentes, **caractérisé en ce que** la première image capturée par la caméra est stabilisée au moyen d'une stabilisation d'image mécanique, optomécanique, électronique et/ou informatique.

6. Procédé selon l'une des revendications précédentes, **caractérisé en ce que** le premier repère (M1) et/ou le second repère (M2) sont automatiquement marqués par comparaison avec des repères enregistrées dans une base de données.

7. Procédé selon l'une des revendications précédentes, **caractérisé en ce que** l'axe optique de la caméra est orienté selon un angle de caméra connu par rapport à l'axe longitudinal du navire (CS).

8. Procédé selon l'une des revendications précédentes, **caractérisé en ce que** la position du navire (CS) déterminée au moyen d'un relèvement est comparée à des données de position d'un autre procédé pour la détermination de position, différent du relèvement, et un signal d'avertissement est émis en cas de dépassement par le haut d'une tolérance prédéterminée.

9. Dispositif pour la détermination de position d'un navire (CS) présentant une timonerie, par relèvement optique d'au moins deux repères (M1, M2) de position connue, comportant
- au moins une caméra dont l'axe optique est orienté par rapport à un système de coordonnées prédéterminé selon un angle de caméra connu et qui présente une résolution fidèle à l'angle au moins dans le plan horizontal,
- un moniteur disposé dans la timonerie du navire et connecté à la caméra pour la reproduction d'une image capturée par la caméra,
- des moyens de marquage disposés dans la timonerie pour le marquage des repères (M1, M2) dans l'image capturée par la caméra, et
- des moyens permettant de définir des lignes de position (S1, S2) reliant la caméra aux repères (M1, M2) et de calculer la position du navire (CS) au moyen des lignes de position (S1, S2).

10. Dispositif selon la revendication 9, **caractérisé en ce que** la caméra est disposée à l'extérieur de la timonerie.

11. Dispositif selon l'une des revendications 9 et 10, **caractérisé en ce que** la caméra présente une stabilisation d'image mécanique, optomécanique, électronique et/ou informatique.

12. Dispositif selon l'une des revendications 9 à 11, **caractérisé en ce que** la caméra présente un objectif ultra-grand angle.

13. Dispositif selon l'une des revendications 9 à 11, **caractérisé en ce que** la caméra est conçue comme une pluralité de caméras.

14. Dispositif selon la revendication 13, **caractérisé en ce que** les angles d'ouverture des caméras sont disposés de manière à se chevaucher et des moyens sont prévus pour l'assemblage d'une seule image à partir de la pluralité d'images capturées par les caméras.
